# EUROPÄISCHE PATENTSCHRIFT

(11) **EP 1 667 270 B1**
(45) Veröffentlichungstag und Bekanntmachung des Hinweises auf die Patenterteilung: **23.07.2014**
(21) Anmeldenummer: 05024620.6
(22) Anmeldetag: 11.11.2005
(51) Int. Cl.: H01M 8/12, H01M 8/10, H01M 8/02

(54) **Gasverteilerplatte für eine Hochtemperatur-Brennstoffzelle**
Gas distribution plate for a high temperature fuel cell
plaque de distribution de gaz pour une pile à combustible à haute témperature

(30) Priorität: 23.11.2004 DE 102004056422
(43) Veröffentlichungstag der Anmeldung: 07.06.2006
(73) Patentinhaber: Forschungszentrum Jülich GmbH, 52425 Jülich (DE)
(72) Erfinder: Blum, Ludger, 52428 Jülich (DE)

(56) Entgegenhaltungen:
- EP-A- 1 241 726
- EP-A- 1 294 038
- DE-A1- 3 812 813
- US-A- 5 496 655
- US-A- 5 993 986
- US-A- 6 106 967
- US-B1- 6 316 136

## Beschreibung

Die Erfindung betrifft eine Hochtemperatur-Brennstoffzelle, insbesondere eine Gasverteilerplatte auf der Kathodenseite einer solchen Brennstoffzelle.

### Stand der Technik

Beim Betrieb von Hochtemperatur-Brennstoffzellen sollte einerseits das Kathodengas gleichmäßig über der Kathode verteilt werden und andererseits gleichzeitig der Strom von der Kathode zum Interkonnektor geleitet werden. Dies geschieht regelmäßig über so genannten Interkonnektoren.

Üblicherweise erfolgt die elektrische Kontaktierung und Gasverteilung der Interkonnektoren über Kanäle, die mechanisch in den Interkonnektor eingearbeitet werden, oder aber durch dünne Bleche, die über einen Prägevorgang hergestellt werden. Alternativ werden auch Netze oder Gewebe aus Edelstahl zwischen Elektroden und planaren Interkonnektoren eingelegt.

Aus EP 1 294 038 A2 ist eine Gasverteilerplatte für eine Bipolarplatte aus einem Metallblech bekannt, in welche parallele Kanäle eingestanzt wurden. Um die Platte läuft ein rahmengleicher Bezirk. Die Kanäle sind seitlich abgeschrägt.

Die US 3,631,136 B1 beschreibt einen Interkonnektor für Hochtemperatur-Brennstoffzellen, welcher aus einem Metallblech besteht, und in den ebenfalls parallele Kanäle eingestanzt wurden.

Die Bipolarplatte in US 5,496,655 wird aus unter Druck gepresstem Ni- und Al-Pulver bereits mit Kanalstrukturen hergestellt, die im Anschluss noch beschichtet werden.

In US 5,993,986 wird eine SOFC mit Komposit-Elektroden beschrieben, bei der ein Interkonnektor mit parallelen Kanalstrukturen zum Einsatz kommt.

Die einzelnen SOFCs in EP 1 241 726 A2 werden durch in Wellenform geprägte metallische Folien voneinander getrennt, ebenso wie es n US 6,106,967 dargestellt wird.

In OS 38 12 813 bilden metallische Folien die Trennwände zu den benachbart angeordneten gewellten Brennstoffzellen.

Die bislang eingesetzten Interkonnektoren weisen jedoch einige Nachteile auf. So ist die mechanische Bearbeitung eines massiven Interkonnektors in der Regel zeit- und damit kostenintensiv. Das Prägen von dünnen Blechen ist demgegenüber zwar kostengünstig, hat allerdings den Nachteil, dass die mechanische Steifigkeit der dünnen Bleche bei der hohen Betriebstemperatur gering ist und das Verhältnis von Kanalbreite zu Kanaltiefe durch das Verformungsverhalten des Bleches nachteilig begrenzt ist. Beim Einsatz von Netzen und Geweben ist die Stabilität der dünnen Drähte aufgrund von Korrosion nach einigen Betriebsstunden nicht mehr sicher gegeben.

### Aufgabe und Lösung

Aufgabe dieser Erfindung ist es, eine Vorrichtung zur homogenen Gasverteilung auf der Kathodenseite eine Hochtemperatur-Brennstoffzelle zur Verfügung zu stellen, die einerseits kostengünstig herstellbar ist, und dennoch die erforderliche mechanische Stabilität und Korrosionsfestigkeit bei den Einsatztemperaturen aufweist.

Die Aufgabe der Erfindung wird gelöst durch eine Gasverteilerplatte mit der Gesamtheit an Merkmalen gemäß Hauptanspruch. Weitere vorteilhafte Ausführungen finden sich in den davon abhängigen Ansprüchen wieder.

### Gegenstand der Erfindung

Die Erfindung betrifft eine Gasverteilerplatte, welche als ein Einlegeteil einfach herzustellen ist, mechanisch stabil ist und Wandstärken aufweist, die es für einen Einsatz in einer Hochtemperatur-Brennstoffzelle ausreichend korrosionsstabil machen.

Die erfindungsgemäße Gasverteilerplatte kann vorteilhaft aus einem planaren Blech mit einer Wandstärke bis 2 mm hergestellt werden, in dem eine Kanalstruktur beliebiger Steg bzw. Kanalbreite zum Beispiel durch Stanzen oder Laser- oder Wasserstrahlschneiden realisiert wird.

Als geeignete Materialien für das erfindungsgemäße Bauteil sind die üblichen Interkonnektorwerkstoffe, wie beispielsweise ferritische Chromstähle zu nennen. Eine minimale Wandstärke von 0,5 mm sollte regelmäßig nicht unterschritten werden, um die Stabilität und Korrosionsbeständigkeit sicherzustellen.

Bei einer direkten parallelen Strömungsführung weisen die Kanäle an beiden Seiten im Bereich der Querstege Anschrägungen auf, damit das Kathodengas ohne größeren Widerstand in den Verteiler ein- und wieder austreten kann. Durch die Ausführung der Schräge kann vorteilhaft der Einströmwiderstand und damit die Strömungsgleichverteilung beeinflusst werden.

Es ist im Rahmen der Erfindung aber auch möglich, die Kanäle in Form einfacher Mäanderstrukturen auszubilden. Es muss nur sichergestellt sein, dass durch die Querstege die mechanische Stabilität der Verteilerstruktur in ausreichendem Maße sichergestellt werden kann.

Die Gasverteilerplatte selbst kann zur besseren Kontaktierung beispielsweise an eine glatte Interkonnektorplatte angelötet oder angeschweißt werden oder auch durch eine keramische Kontaktpaste und durch einfaches Andrücken kontaktiert werden.

Sofern die Gasverteilerplatte aus einem chromabdampfenden Material besteht, kann sie beispielsweise durch Nasspulverspritzen oder Tauchen (Dip-Coating) mit einer keramischen Schutzschicht überzogen werden, um das nachteilige Verdampfen von Chrom aus der Chromoxid-Deckschicht des Bauteils regelmäßig zu verhindern.

Damit erfüllt diese erfindungsgemäße Gasverteilerplatte insbesondere die Anforderung einfach herstellbar, mechanisch stabil und ausreichend korrosionsstabil zu sein.

### Spezieller Beschreibungsteil

Nachfolgend wird der Gegenstand der Erfindung anhand von Figuren und einem Ausführungsbeispiel näher erläutert, ohne dass der Gegenstand der Erfindung dadurch beschränkt wird. Es zeigen:

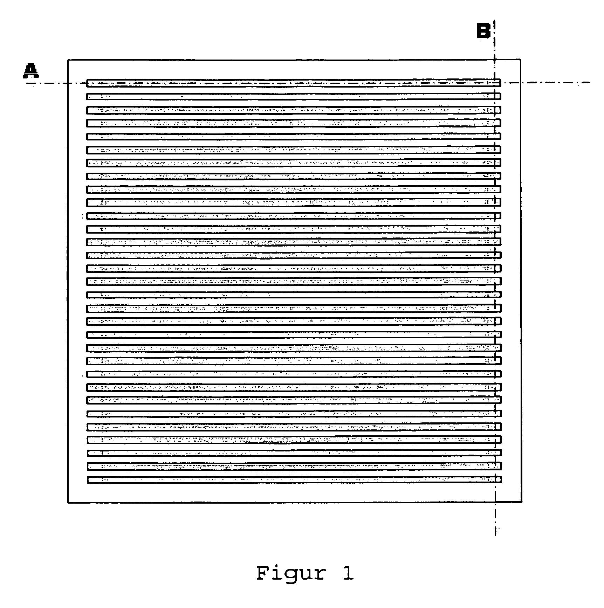

- Figur 1:: Aufsicht auf eine Ausgestaltung der erfindungsgemäßen Gasverteilerplatte.

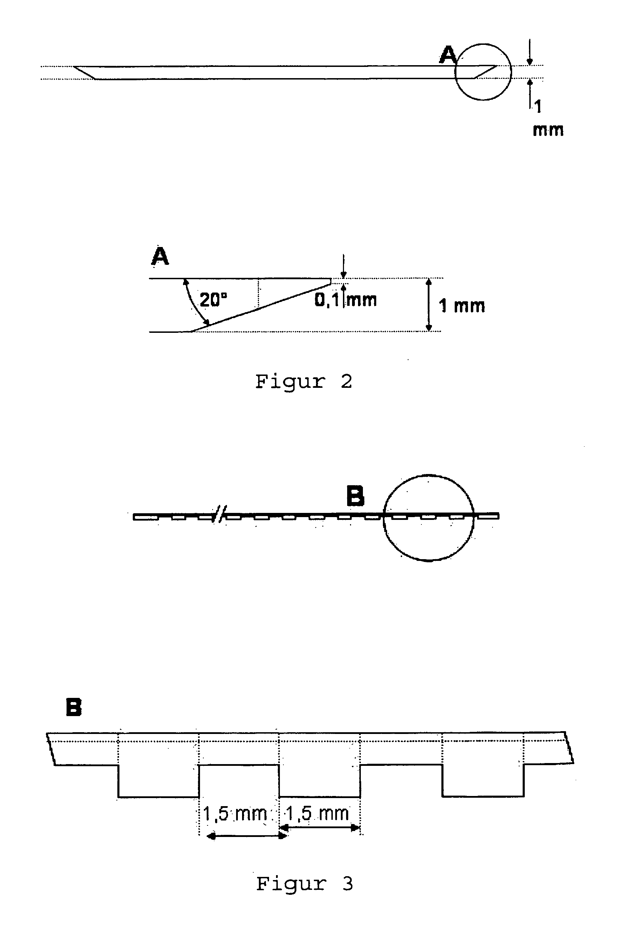

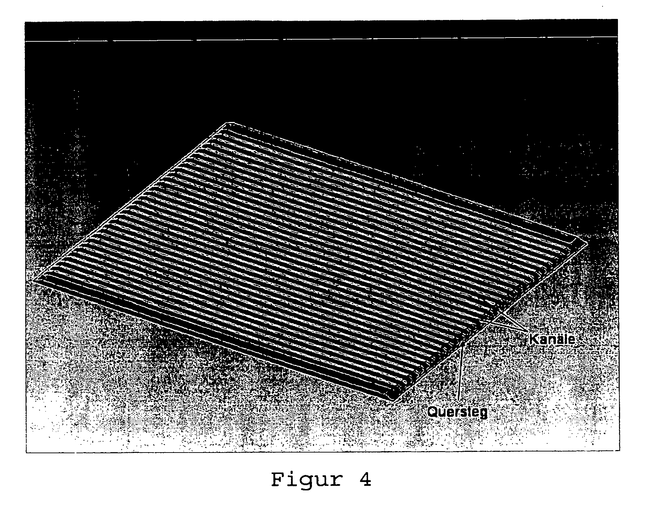

- Figur 2:: Schnittzeichnung mit Kanalstruktur.
- Figur 3:: Schnittzeichnung einer Anschrägung eines Kanals im Bereich eines Querstegs.

Ein typisches Ausführungsbeispiel einer Gasverteilerplatte weist die Außenmaße 100 x 100 x 1 mm auf. Die Platte ist aus einem ferritischen Chromstahl gefertigt. Die Kanalstrukturen wurden eingestanzt. Die Kanäle und die Stege weisen jeweils eine Breite von 1,5 mm auf. An den seitlichen Querstegen weisen die Kanäle jeweils eine Abschrägung von 20 ° auf.

## Patentansprüche

1. Gasverteilerplatte geeignet als Einlegeteil für eine Hochtemperatur-Brennstoffzelle umfassend ein planares Blech mit Kanalstrukturen, wobei das Blech an zwei gegenüberliegenden Seiten jeweils eine Abschrägung aufweist, und die Kanalstrukturen derart angeordnet sind, dass die Abschrägungen jeweils im Bereich des Anfangs und des Endes der Kanalstrukturen angeordnet sind.

2. Gasverteilerplatte nach vorhergehendem Anspruch 1, bei dem die Kanalstrukturen parallel verlaufen.

3. Gasverteilerplatte nach einem der vorhergehenden Ansprüche 1 bis 2, bei dem die Kanalstrukturen jeweils eine Breite von 0,5 bis 2 mm aufweisen, insbesondere eine Breite von 1 bis 1,5 mm.

4. Gasverteilerplatte nach einem der vorhergehenden Ansprüche 1 bis 3 mit einer Wandstärke von 0,5 bis 2 mm.

5. Gasverteilerplatte nach einem der vorhergehenden Ansprüche 1 bis 4 bei dem die Kanäle der Kanalstrukturen identische Geometrien aufweisen.

## Claims

1. A gas distributor plate, suitable as an insert for a high-temperature fuel cell, comprising a flat sheet with channel structures, the sheet having a bevel on each of its two opposite sides and the channel structures being arranged in such a way that the bevels are located in the region of the beginning and end of each of the channel structures.

2. A gas distributor plate according to the above Claim 1, in which the channel structures run parallel.

3. A gas distributor plate according to one of the above Claims 1 or 2, in which the channel structures each have a width of 0.5 to 2 mm, and in particular a width of 1 to 1.5 mm.

4. A gas distributor plate according to one of the above Claims 1 to 3 having a wall thickness of 0.5 to 2 mm.

5. A gas distributor plate according to one of the above Claims 1 to 4, in which the channels of the channel structures have identical geometries.

## Revendications

1. Plaque de distribution de gaz appropriée en tant que pièce d'insertion pour une pile à combustible à haute température comprenant une tôle planaire avec des structures de canal, la tôle présentant respectivement un biseau sur deux côtés opposés et les structures de canal étant disposées de telle manière que les biseaux soient disposés respectivement dans la zone du début et de l'extrémité des structures de canal.

2. Plaque de distribution de gaz selon la revendication précédente 1, dans laquelle les structures de canal s'étendent en parallèle.

3. Plaque de distribution de gaz selon l'une quelconque des revendications précédentes 1 à 2, dans laquelle les structures de canal présentent respectivement une largeur de 0,5 à 2 mm, en particulier une largeur de 1 à 1,5 mm.

4. Plaque de distribution de gaz selon l'une quelconque des revendications précédentes 1 à 3, avec une épaisseur de paroi de 0,5 à 2 mm.

5. Plaque de distribution de gaz selon l'une quelconque des revendications précédentes 1 à 4, dans laquelle les canaux des structures de canal présentent des géométries identiques.
